Europäisches Patentamt

European Patent Office

Office européen des brevets

(11) Publication number: **0 144 761**
**A2**

## (12) EUROPEAN PATENT APPLICATION

(21) Application number: **84113308.5**

(22) Date of filing: **06.11.84**

(51) Int. Cl.⁴: **G 01 S 7/52**
**G 10 K 11/20**

(30) Priority: **08.11.83 DE 8332005 U**
**09.11.83 US 550326**

(43) Date of publication of application:
**19.06.85 Bulletin 85/25**

(84) Designated Contracting States:
**CH DE FR GB LI**

(71) Applicant: **HONEYWELL INC.**
**Honeywell Plaza**
**Minneapolis Minnesota 55408(US)**

(72) Inventor: **Koukovinis, Christos M.**
**96 Greenfield Drive**
**Freeport Illinois 61032(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) Ultrasonic sensor.

(57) A single transducer ultrasonic distance sensor is disclosed which provides for range sensing down to zero distance from an envelope (24) of a sensor housing (11) with an electro-acoustic transducer (17) subject to unavoidable ringing following emission of a burst of acoustic energy. The housing (11) is configured and the transducer mounted therein so that an acoustic path at least half as great as the distance travelled by an acoustic signal during the transducer ringing interval is provided within the housing envelope.

FIG. 2

Croydon Printing Company Ltd.

HONEYWELL INC.
Honeywell Plaza
Minneapolis, Minn. USA

November 5, 1984
M1010400 EP
Hz/ep

## Ultrasonic Sensor

The present invention relates to an ultrasonic sensor
according to the preamble of claim 1.

There are at least two general techniques for ultrasonically measuring
distance to an object. One involves transmitting a continuous sinusoidal or sinusoidally modulated wave toward
a target, and measuring the phase shift in the wave reflected back from the target. Transmission of ultrasonic
energy and reception of reflections thereof can be accomplished with separate transmitting and receiving transducers. The phase shift which has occurred during signal
transit can be determined by phase comparison circuitry.
Such a system is disclosed in US-A 3 577 144.

A two transducer continuous transmission system has certain disadvantages. Most obviously, two transducers are
required, thus contributing to the cost and physical size
of the system. Further, the transducer elements must be
closely tuned to one another. The requirement for initially matching the transducer elements contributes to manufacturing cost and complexity. In addition, the transducer elements are subject to frequency drift, thus requiring means for at least periodically adjusting tuning
circuits associated with one or both transducer elements.
The tuning circuits and devices further contribute to the
cost and complexity of such systems. The tuning process
may also contribute to operational time lags, inaccuracies
and other limitations.

The foregoing problems and limitations can be avoided in a system using a single transducer for both the transmission and reception of ultrasonic energy. Examples of such systems are shown in US-A 2 826 753 and 3 960 007. In such systems, a standing wave is set up between the transducer and target. An impedance mismatch, depending on the relative phases of the transmitted and reflected waves, occurs at the transducer and is reflected back into its drive circuitry. This results in variations in the drive voltage which can be used to indicate target range.

Continuous wave systems as previously described are capable of providing very good distance sensing accuracy at relatively short ranges and continuous sensing of distance. However, they require relatively high input power since the transmission is continuous, and operational range is relatively short. Attempts to increase range by increasing the input power result in increased heating and rapid deterioration of the transducer element(s). Finally, such systems are prone to distance measuring ambiguities, particularly where the target includes reflecting surfaces at varying distances from the transducer, resulting in multiple signal paths.

A second general technique is based on determining distance by the time interval between transmission of a pulse of acoustic energy and reception of a reflection of that pulse from the target. This can be accomplished either with separate transmitting and receiving transducers or with a single transducer which performs both functions. As in connection with two transducer continuous transmission sensors, the transducers must be relatively well matched. The second transducer again contributes to the cost, complexity and size of the sensor package.

Pulse transmission sensors are capable of providing only periodic range indications. This drawback can be reduced by increasing the frequency of measurement. However, as the frequency of measurement is increased, the relationship

- 3 -

between the transmitted signals and corresponding reflections becomes progressively more difficult to determine. Nevertheless, ultrasonic distance sensors operating with periodic pulses are suitable for many distance measuring applications. They are also more suitable than continuous transmission sensors for operation at relatively large target ranges, and they consume less power.

As in the continuous transmission sensors, at least some of the disadvantages of two transducer pulse transmission sensors are avoided in single transducer implementations. However, single transducer pulse transmission sensors are subject to certain significant limitations because of the effects of mechanical resonance or ringing of the transducer element after each emission of a burst of acoustic energy. The ringing dies down to an acceptable level after a known time interval. However, until such a level is reached, the transducer is not capable of reliably detecting incoming acoustic energy reflected from the target. This results in inability to measure distance at very short ranges from the transducer. Such a limitation is unacceptable in many ultrasonic distance sensor applications.

Therefore, it is the object of the present invention to devise a single transducer pulse transmission ultrasonic sensor being capable of distance measurements from the maximum range of the sensor down to a range of zero distance.

This object is achieved according to the characterizing features of claim 1 or 2, respectively. Further advantageous embodiments of the inventive sensor may be taken from the dependent subclaims.

The present invention basically comprises a housing or mounting means, respectively, which supports an electroacoustic transducer adapted to be driven by an electrical signal so that it alternately emits a burst of acoustic energy and converts the portion of the burst of acoustic energy reflected back from a remote target to a corresponding electrical signal. The housing or mounting means which defines an envelope is configured so that acoustic energy emitted by the transducer traverses a distance at least half as great as that which it travels during the transducer ringing interval before leaving the envelope. The acoustic energy may be redirected to leave the envelope by means of a reflecting surface which may be spaced from the radiating surface of the transducer by a distance substantially half as great as that which the acoustic energy travels during the transducer ringing interval. The reflecting surface may be either planar or non-planar and may define a parabolic section whose focus is substantially at the radiating surface of the transducer to increase sensor gain. Further, the housing may be configured with the head which supports the transducer such that it projects acoustic energy essentially parallel with a major longitudinal dimension of the sensor housing to reduce housing size.

With respect to the figures of the attached drawing, embodiments of the invention shall be further described, wherein

Figure 1 is an exploded pictorial view of an ultrasonic sensor in accordance with the present invention;

Figure 2 is a sectional side view of the sensor of Figure 1 equipped with a reflecting surface configured as a parabolic section;

Figure 3 is a partial sectional side view of a sensor housing in accordance with the present invention equipped with a planar reflecting surface;

Figure 4 is an exploded pictorial view of a modified ultrasonic sensor in accordance with the present invention; and

Figure 5   shows mounting and reflecting means for a transducer connected to the embodiment of Figure 4.

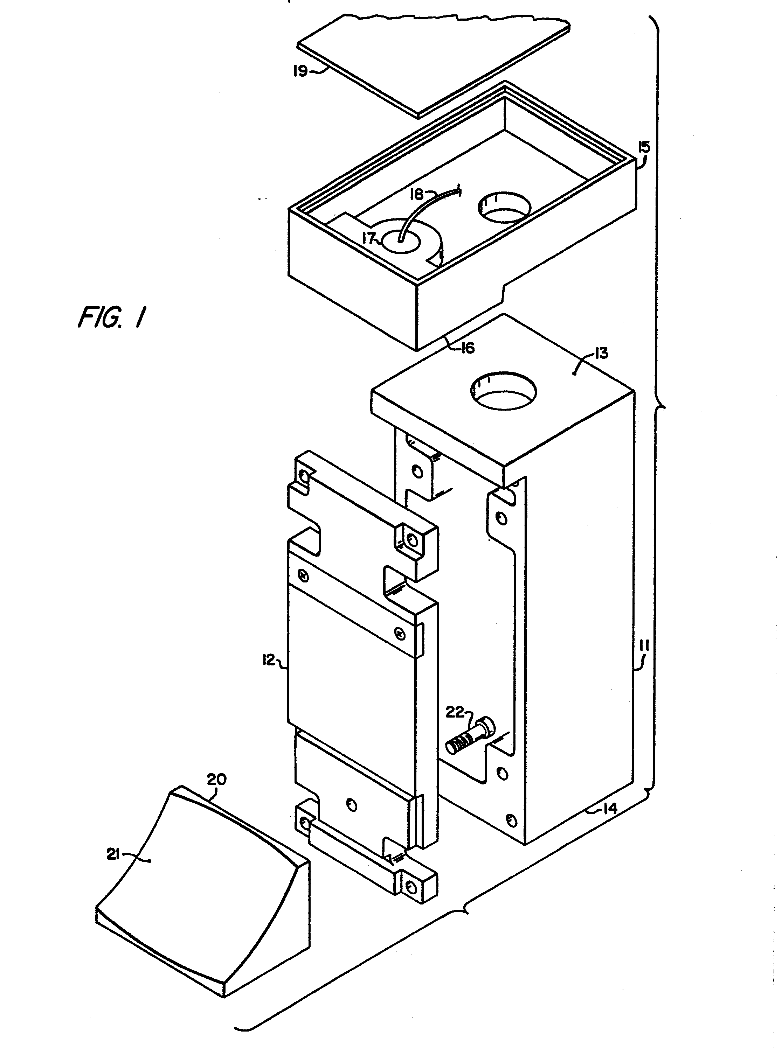

In the pictorial view of Figure 1, reference 11 identifies the main body part of an ultrasonic distance sensor in accordance with the applicant's invention. Body part 11 cooperates with a cover 12 to form a compartment for electroacoustic drive and signal processing circuitry.  The body has first and second ends 13 and 14 respectively which are perpendicular to a major longitudinal dimension of the housing.  Cover 12 defines a major face which intersects the first and second ends of the body.

The sensor housing also includes a head 15 which is mounted on first end 13 of the body.  Head 15 includes a projecting portion 16 which extends beyond the edge of end 13 at its intersection with the major face.  An electroacoustic transducer 17 is mounted in projecting portion 16, and is directed to emit and receive acoustic energy in a direction substantially parallel with the major face and longitudinal dimension of the housing body.  Reference 18 identifies an electrical cable which connects transducer 17 to the electronic circuitry within the housing body.  A compartment within head 15 is closed by means of a cover 19.

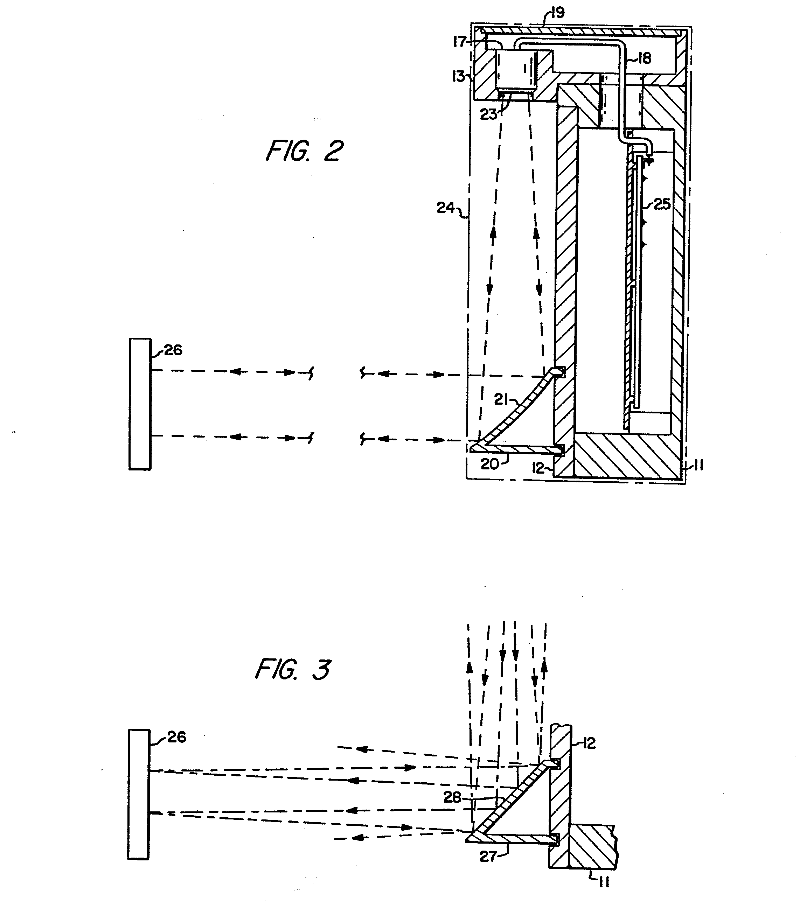

A reflector 20 having a reflecting surface 21 thereon is mounted on cover 12 near body end 14 by means of a screw 22.  Reflector 20 is in a position to redirect at least a portion of the acoustic energy emitted by transducer 17, and to direct acoustic energy impinging on surface 21 from a remote target toward the transducer.  As shown in Figures 1 and 2, surface 21 is a section of a parabaloid having its focus  at a radiating surface 23 of transducer 17.

In Figure 2, reference 25 identifies a printed circuit board carrying the electronic drive and signal processing circuitry for transducer 17.  Such circuitry preferably includes a programmed microprocessor which is responsible for timing the bursts of acoustic energy emitted by transducer 17 and processing the reflections of the bursts of acoustic energy received by transducer 17 to determine distance between the sensor housing and a target identified by reference numeral 26.  The sensor housing, comprising body part 11, head 13 and reflector 21, defines a housing envelope 24.  Housing envelope 24 conforms more or less to the outer configuration of the sensor housing.  However, the significant feature is that the housing is configured so that intended targets do not come within the housing envelope.

After being electrically driven to emit a burst of acoustic energy, transducer 17 unavoidably mechanically resonates or rings for a known time interval. During the known time interval acoustic energy received by the transducer is contaminated by the ringing of the transducer and cannot be processed to reliably determine target range. Also during the known time interval, an acoustic signal will travel a known distance. The sensor housing and transducer mounting arrangement are configured so that acoustic energy emitted by transducer 17 travels a distance at least half as great as the known distance before leaving transducer envelope 24. A similar time interval is required for any return reflection to traverse the distance between where it enters the housing envelope and the transducer. This permits target range to be reliably sensed for distances down to zero distance between the sensor housing and the target.

As shown in Figure 2, parabolic reflecting surface 21 serves to focus incoming acoustic energy onto face 23 of transducer 17, thus maximizing the gain of the sensor. Maximum gain is desirable in certain applications. However, it is achieved at the expense of a narrowed field of view.  If a particular sensor application requires a wider field of view, reflector 20 may be configurd with a non-parabolic reflecting surface.

Figure 3 illustrates a sensor with a reflector 27 having a planar reflecting surface 28.  With such a reflecting surface, acoustic energy impinging thereon from transducer 17 is dispersed somewhat as it leaves the reflecting surface to achieve a wider field of view.  Similarly, reflections of acoustic energy from target 26 which are intercepted by surface 27 are only partially reflected to transducer 17.  In any event, the particular configuration of the reflecting surface is determined by the requirements of the application in which the sensor is used.  As shown, the reflector is easily changed so as to permit the basic sensor to be used in a wide variety of applications.

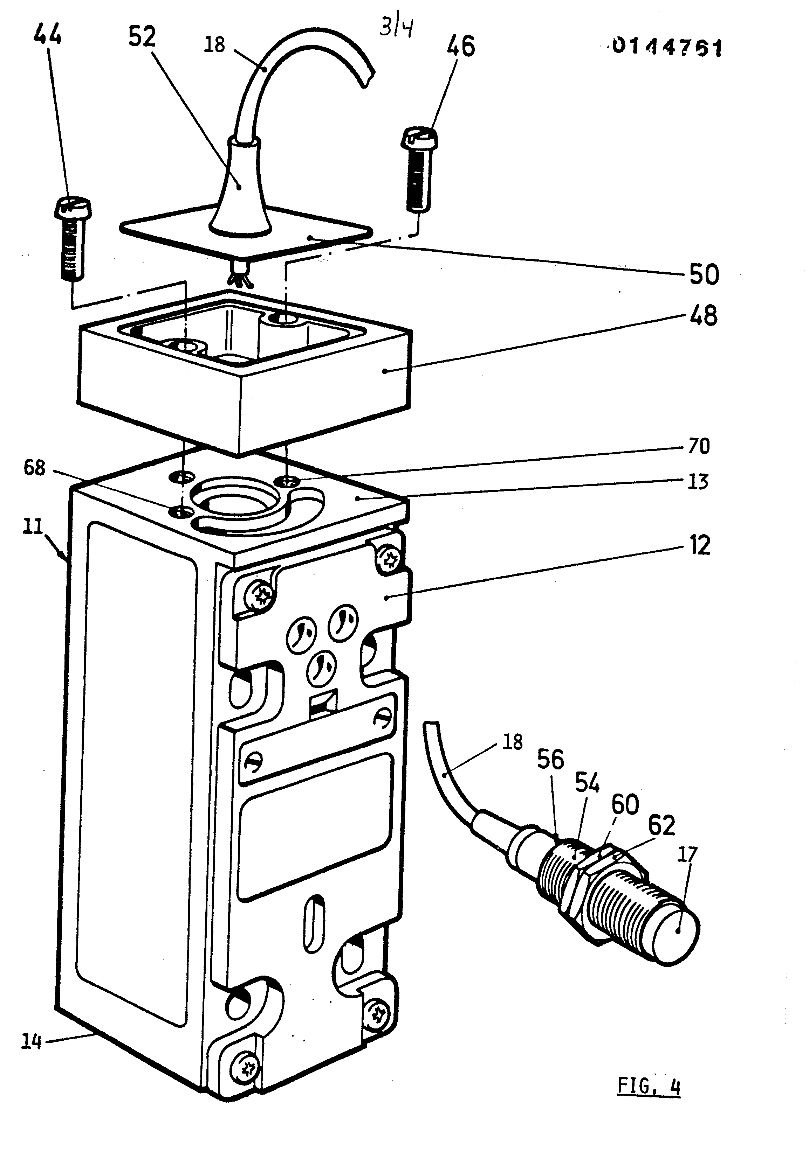

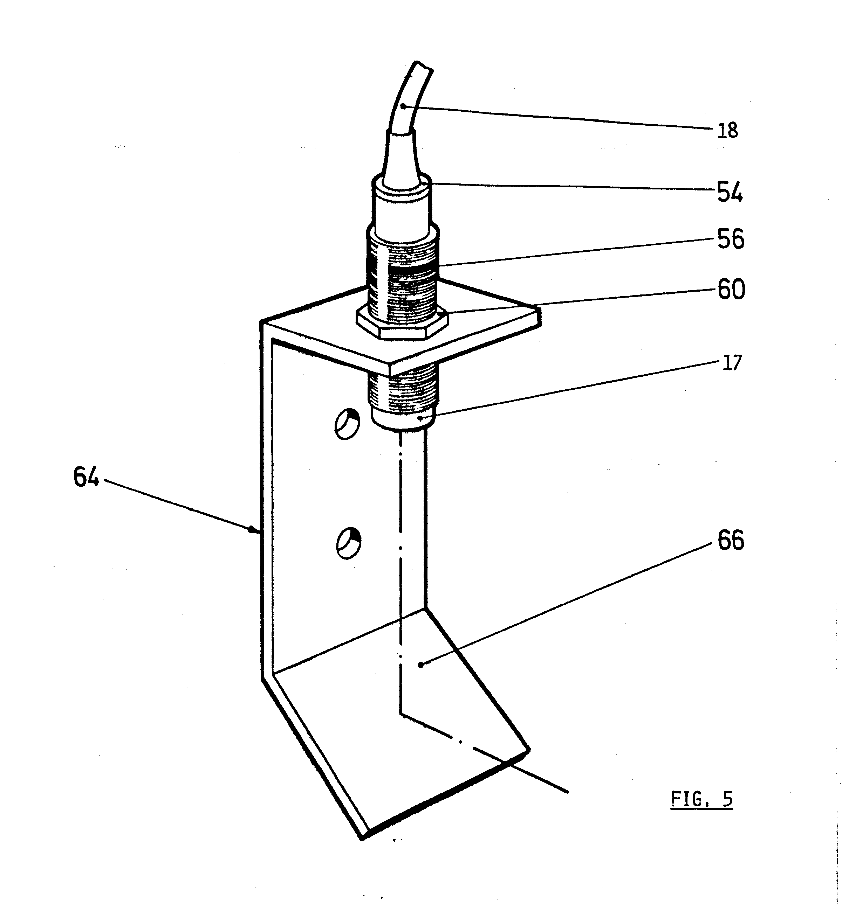

Figures 3 and 4 show a modification of the ultrasonic sensor according to figures 1 to 3. Here a modified head 48 is mounted on first end 13 of the main body part or housing 11 by means of two fixing screws 44, 46 which are inserted into two threaded bores 68, 70 within body 11. The cover 50 closes the head 48 and serves to hold a cable bushing 52 through which the electrical cable 18 is connected to the processing circuitry within body 10. The electrical cable 18 is connected to the transducer 17. The transducer 17 is located within a tubular shell 54 with said shell 54 being provided with an outer thread 56. Two nuts 60, 62 serve to fix the tubular shell 54 at an appropriate mounting means which may have the configuration of an angle sheet iron 64 (Fig. 5). Said angle sheet iron 64 comprises a reflector surface 66 having a predetermined distance from the transducer 17. The beam length within the axis of the sound cone, i.e. between the transducer 17 and the reflector surface 66, preferrably is chosen according to the usually requested safety distance so that lateral to the device an object may be sensed down to a distance of zero.

Claims:

1. Ultrasonic sensor comprising:

an electroacoustic transducer (17) adapted to alternately emit a burst of acoustic energy in response to a corresponding electrical drive signal and to convert the portion of the burst of acoustic energy reflected back from a remote target (26) to a corresponding electrical signal, said transducer (17) being subject to unavoidable ringing for a known time interval after each emission of a burst of acoustic energy, c h a r a c t e r i z e d    b y a housing (11 - 13, 15, 19, 20, 27) defining a housing envelope (24), said housing supporting said electroacoustic transducer (17) so that acoustic energy emitted thereby traverses a distance at least half as great as that which it travels during the known time interval before leaving the housing envelope (24).

2. Ultrasonic sensor comprising:

an electroacoustic transducer (17) adapted to alternately emit a burst of acoustic energy in response to a corresponding electrical drive signal and to convert the portion of the burst of acoustic energy reflected back from a remote target to a corresponding electrical signal, said transducer (17) being subject to unavoidable ringing for a known time interval after each emission of a burst of acoustic energy, c h a r a c t e r i z e d     b y mounting means (64) for supporting said electroacoustic transducer (17) and reflector means (66) inclined to said burst of acoustic energy and located at a distance from said transducer (17) with said distance being at least half as great as that which it travels during the known time interval before leaving the reflector means.

3. Sensor according to claim 1, c h a r a c t e r i z e d b y   reflector means (20, 27) within the housing envelope (24) positioned to intercept at least a portion of the acoustic energy emitted by said electroacoustic transducer (17) and to reflect the intercepted energy out of the housing envelope (24).

4. Ultrasonic sensor according to claim 3, c h a r a c - t e r i z e d i n t h a t said reflector means (20, 27) is based from said electroacoustic transducer (17) by a distance substantially equal to half the distance traversed by acoustic energy during the known time interval.

5. A sensor according to claim 2 and 4, c h a r a c t e r - i z e d i n t h a t said reflector means (20, 27; 66) is positioned to reflect the intercepted energy in a direction which is substantially perpendicular to the direction in which acoustic energy is emitted by said electroacoustic transducer (17).

6. Sensor according to claims 1, 3 and 4, c h a r a c - t e r i z e d i n t h a t said housing includes: a body (11, 12) having first and second ends (13, 14) and a major dimension transverse to the first and second ends (13, 14); and a head (15) mounted on the first end (13) of said body (11, 12), said head (15) having a portion (16) which extends substantially parallel with the first end (13) of said body (11, 12) beyond the edge thereof, said head (15) supporting said electroacoustic transducer (17) in a position so that the path of acoustic energy emitted by said transducer is substantially parallel with the major dimension of said body (11, 12), said reflector means (20, 27) being located on said body (11, 12) near the second end (14) thereof and positioned to reflect acoustic energy from said transducer (17) in a direction transverse to the major dimension of said body (11, 12).

7. Sensor according to claim 6, c h a r a c t e r i z e d i n t h a t said reflector (20, 27) is detachably mounted on said body (11, 12).

8. Sensor according to claims 2 and 6, c h a r a c t e r - i z e d i n t h a t said reflector means (27, 66) has a planar reflecting surface (28) thereon.

9. Sensor according to claim 6,  c h a r a c t e r i z e d
i n   t h a t  said reflector means (20) has a non-planar
reflecting surface (21) thereon.

10. Sensor according to claim 9,  c h a r a c t e r i z e d
i n   t h a t  the reflecting surface (21) on said
reflector means (20) defines a parabolic section whose
focus is substantially at a radiating surface (23) of
said electroacoustic transducer (17), whereby the gain
of the ultrasonic sensor is increased.

11. Sensor according to claim 2,  c h a r a c t e r i z e d
i n   t h a t  said mounting means and said reflecting
means are formed by an angle sheet iron (64).

12. Sensor according to claim 11,  c h a r a c t e r i z e d
i n   t h a t  said transducer (17) is arranged within
a cylindrical housing (54) provided with an external thread
(56) and being adjustably secured to said angle sheet iron
(64) by means of nuts (60, 62).

FIG. I

*FIG. 2*

19
17
18
13
23
24
25
26
21
20
12
11

*FIG. 3*

26
12
28
27
11

3/4

0144761

FIG. 4

18

54

56

60

17

64

66

FIG. 5